**Europäisches Patentamt**

**European Patent Office**

**Office européen des brevets**

(19)

(11) Veröffentlichungsnummer: **0 234 259**
**B1**

(12)
# EUROPÄISCHE PATENTSCHRIFT

(45) Veröffentlichungstag der Patentschrift:
16.05.90

(51) Int. Cl.⁵: **G01P 3/36**

(21) Anmeldenummer: **87100719.1**

(22) Anmeldetag: **20.01.87**

(54) **Lichtwellenleiterwickel.**

(30) Priorität: **29.01.86 DE 3602584**

(43) Veröffentlichungstag der Anmeldung:
**02.09.87 Patentblatt 87/36**

(45) Bekanntmachung des Hinweises auf die Patenterteilung:
**16.05.90 Patentblatt 90/20**

(84) Benannte Vertragsstaaten:
**BE DE ES FR GB IT NL SE**

(56) Entgegenhaltungen:
DE-A- 3 152 704
DE-A- 3 332 718
GB-A- 2 128 815
GB-A- 2 161 028

**Die Akte enthält technische Angaben, die nach dem Eingang der Anmeldung eingereicht wurden und die nicht in dieser Patentschrift enthalten sind.**

(73) Patentinhaber: **Standard Elektrik Lorenz Aktiengesellschaft, Lorenzstrasse 10, D-7000 Stuttgart 40(DE)**

(72) Erfinder: **Hofmann, Werner, Eiselbachstrasse 5, D-7121 Ingersheim(DE)**
Erfinder: **Mohr, Friedemann, Dr., Stauferstrasse 6, D-7253 Renningen(DE)**
Erfinder: **Bräutigam, Leo, Schönblickstrasse 18, D-7302 Ostfildern(DE)**
Erfinder: **Mieskes, Heinz, Riedstrasse 41, D-7120 Bietigheim(DE)**

(74) Vertreter: **Graf, Georg Hugo, Dipl.-Ing. et al, Standard Elektrik Lorenz AG Patent- und Lizenzwesen Postfach 30 09 29, D-7000 Stuttgart 30(DE)**

ACTORUM AG

## Beschreibung

Die Erfindung betrifft einen Lichtwellenleiterwickel in einem Gehäuse.

Durch die DE-A 3 332 718 ist ein Lichtwellenleiterwickel bekannt, der freitragend auf einem Dorn aufgebracht ist. Die Windungen des Wickels werden entweder während des Wickelvorgangs miteinander verklebt oder nach der Fertigstellung des Wickels mit einer kautschukartigen Masse übergossen. Dieses dient unter anderem dazu, dem vom Dorn abgezogenen freitragenden Wickel die notwendige Stabilität zu geben. Zum Schutz gegen störende Einflüsse von außen ist der Wickel von einem Metallmantel umgeben.

Die Herstellung freitragender Wickel ist nicht unproblematisch. Ein optimaler Schutz durch einen Metallmantel ist nur dann gegeben, wenn der Wickel zentrisch gelagert ist.

Die Aufgabe der Erfindung besteht darin, die Herstellung eines von einem Gehäuse zentrisch umgebenen Lichtwellenleiterwickels zu optimieren.

Diese Aufgabe wird durch die im Anspruch 1 angegebenen Merkmale gelöst. Die Unteransprüche 2 bis 5 zeigen vorteilhafte Ausgestaltungen des Erfindungsgegenstandes auf. Im Anspruch 6 ist das Verfahren zur Herstellung der Lichtwellenleiterspule angegeben.

Die durch die Erfindung erzielten Vorteile bestehen insbesondere darin, daß der Lichtwellenleiterwickel durch die Einbettung in ein ihn allseitig gleichmäßig umgebendes Elastomer weitgehend gegen von außen auf das Gehäuse einwirkende Stoß-, Schalldruck- und Temperatureinflüsse geschützt ist, daß einseitig auftretende Temperaturänderungen durch den thermischen Kurzschluß innerhalb des Gehäuses ausgeglichen werden, daß das Aufbringen des Wickels auf einen Spulenkörper eine einfache Herstellung des Lichtwellenleiterwickels ermöglicht, daß die Lagen des Wickels durch das vorübergehende Aufweiten des elastischen Spulenkörpers zum Zeitpunkt des Vergießens weitgehend spannungsfrei sind und daß die Abstandhalter des Spulenkörpers auf einfache Weise eine symmetrische Anordnung des Lichtwellenleiterwickels in der Ringnut des Gehäuses sicherstellen.

Anhand eines Ausführungsbeispiels wird die Erfindung in Verbindung mit den Zeichnungen nachfolgend näher erläutert. Es zeigt:

Fig. 1 einen Vertikalschnitt eines Lichtwellenleiterwickels in einem Gehäuse gemäß der Erfindung,
Fig. 2 einen Horizontalschnitt des Wickels nach Fig. 1.

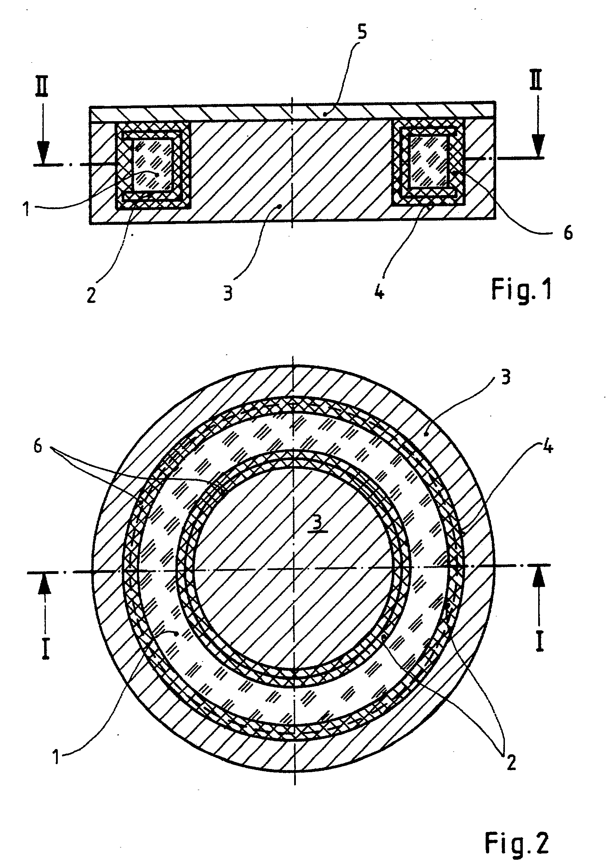

Wie aus den Figuren ersichtlich, besteht das Gehäuse für den Lichtwellenleiterwickel aus einem massiven Unterteil 3, das eine konzentrisch angeordnete Ringnut 4 hat, und einem Deckel 5. Es ist aus einem gut wärmeleitenden Material hergestellt. Dieses kann Metall oder ein Kunststoff sein, der anorganische wärmeleitfähige Füllstoffe enthält. Die Ringnut 4 hat einen Querschnitt, der größer ist als der Querschnitt einer Spule 1/2. Letztere besteht aus einem Spulenkörper 2 aus einem Elastomer geringer Härte und dem darauf befindlichen Lichtwellenleiterwickel 1. Die Spule 1/2 ist etwas kleiner als die Ringnut 4. Durch nicht dargestellte Abstandshalter am Spulenkörper 2 wird die Spule 1/2 so in der Ringnut 4 fixiert, daß der Lichtwellenleiterwickel 1 genau in der Mitte der Ringnut 4 angeordnet ist, wie Fig. 1 erkennen läßt. Zur Sicherung der beschriebenen Lage und zur Dämpfung äußerer Einflüsse auf das Gehäuse 3/5, ist die Spule 1/2 in der Ringnut 4 in eine Vergußmasse 6 eingebettet. Diese besteht vorzugsweise aus dem gleichen oder einem ähnlichen Elastomer wie der Spulenkörper 2.

Nachfolgend wird die Herstellung des Lichtwellenleiterwickels 1 und die Art der Einbettung der Spule 1/2 beschrieben.

Der elastische Spulenkörper 2 wird zum Aufbringen des Lichtwellenleiterwickels 1 auf einen Wickeldorn aufgeschoben und dabei etwas aufgeweitet. Anschließend wird der Lichtwellenleiter unter sehr niedriger Zugspannung auf den Spulenkörper 2 aufgebracht, so daß ein relativ loser weitgehend spannungsfreier Wickel 1 entsteht. Beim Abziehen vom Dorn nimmt der Spulenkörper 2 wieder seine ursprüngliche Form an. Durch den sich um die Aufweitung verringernden Kern des Spulenkörpers 2 erhält der Wickel 1 ein geringes Spiel auf dem Spulenkörper 2, so daß sich mögliche Spannungen im Innern des Wickels 1 zur Mitte hin lösen können. Die so hergestellte Spule 1/2 wird sodann in die Ringnut 4 des Gehäuseunterteils 3 eingelegt. Die nicht dargestellten Abstandshalter am Spulenkörper 2 positionieren die Spule 1/2 derart in der Ringnut 4, daß der Lichtwellenleiterwickel 1 einen gleichen Abstand zu allen den Wickel umschließenden Flächen hat. Um einen möglichst guten Wärmeübergang zwischen dem Gehäuseunterteil 3 und dem Deckel 5 zu erhalten, sind diese zusätzlich zu z.B. einer Schraubverbindung durch einen wärmeleitenden Kleber miteinander verbunden. Anschließend wird über nicht dargestellte Angußöffnungen der verbleibende Freiraum der Ringnut 4 im Vakuum mit der Vergußmasse 6 ausgefüllt. Diese dringt auch zwischen die Windungen des Wickels 1 und bettet diese gegeneinander isolierend vollständig ein. Die Vergußmasse 6 ist ein gleiches oder ähnliches Elastomer wie das Elastomer des Spulenkörpers 2.

## Patentansprüche

1. Lichtwellenleiterwickel in einem Gehäuse, bei dem der Lichtwellenleiterwickel (1) auf einen Spulenkörper (2) aus einem Elastomer geringer Härte aufgewickelt ist, die so gebildete Spule (1/2) und der freie Innenraum des Gehäuses (3/5) mit einer Vergußmasse (6) vergossen sind und die Vergußmasse (6) ein gleiches oder ähnliches Elastomer wie das Elastomer des Spulenkörpers (2) ist.

2. Lichtwellenleiterwickel nach Anspruch 1, dadurch gekennzeichnet, daß das Gehäuse aus einem massiven Unterteil (3) mit Ringnut (4) und einem Deckel (5) besteht.

3. Lichtwellenleiterwickel nach Anspruch 1, dadurch gekennzeichnet, daß der Spulenkörper (2) an seinen Außenflächen Abstandshalter hat.

4. Lichtwellenleiterwickel nach Anspruch 2, dadurch gekennzeichnet, daß das Gehäuse (3/5) aus Metall ist.

5. Lichtwellenleiterwickel nach Anspruch 2, dadurch gekennzeichnet, daß das Gehäuse (3/5) aus Kunststoff besteht, der anorganische wärmeleitfähige Füllstoffe enthält.

6. Verfahren zur Herstellung eines Lichtwellenleiterwickels nach Anspruch 1, bei dem ein Spulenkörper (2) zum Bewickeln auf einen Wickeldorn aufgesteckt und dabei aufgeweitet wird, der Lichtwellenleiter unter geringer Wickelspannung auf den Spulenkörper (2) aufgebracht wird, der Spulenkörper (2) beim Abziehen vom Wickeldorn seine ursprüngliche Form wieder annimmt und die Spule (1/2) anschließend in das Gehäuse (3/5) eingelegt und unter Vakuum eingegossen wird.

## Claims

1. Optical-waveguide coil in a housing, wherein the optical-waveguide coil (1) is wound on a coil form (2) made of an elastomer of low hardness, and wherein the coil unit thus formed (1/2) is embedded in, and the free interior of the housing (3/5) is filled with, a sealing compound (6) which is the same elastomer as or an elastomer similar to that of the coil form (2).

2. An optical-waveguide coil as claimed in claim 1, characterized in that the housing consists of a solid lower part (3) and a cover (5), the lower part (3) having an annular groove (4).

3. An optical-waveguide coil as claimed in claim 1, characterized in that the coil form (2) has spacers at its outside surfaces.

4. An optical-waveguide coil as claimed in claim 2, characterized in that the housing (3/5) is made of metal.

5. An optical-waveguide coil as claimed in claim 2, characterized in that the housing (3/5) is made of a plastic containing inorganic thermally conductive fillers.

6. Method of making an optical-waveguide coil as claimed in claim 1, wherein a coil form (2) is slipped over a winding mandrel and simultaneously expanded, wherein the optical waveguide is wound onto the coil form (2) under low tension, wherein the coil form (2) resumes its original shape while being removed from the winding mandrel, and wherein the coil unit (1/2) is subsequently placed in the housing (3/5) and potted under vacuum.

## Revendications

1. Enroulement de fibre optique dans un carter, cet enroulement de fibre optique (1) étant enroulé sur un corps de bobine (2) formé d'une matière élastomère de faible dureté, la bobine (1/2) ainsi créée et le volume intérieur libre du carter (3/5) étant enrobés avec une matière d'enrobage (6) et la matière d'enrobage (6) étant un élastomère identique ou analogue à l'élastomère du corps de bobine (2).

2. Enroulement de fibre optique selon la revendication 1, caractérisé en ce que le carter se compose d'une partie inférieure massive (3) comportant une rainure annulaire (4) et d'un couvercle (5).

3. Enroulement de fibre optique selon la revendication 1, caractérisé en ce que le corps de bobine (2) comporte des entretoises d'espacement sur sa surface extérieure.

4. Enroulement de fibre optique selon la revendication 2, caractérisé en ce que le carter (3/5) est en métal.

5. Enroulement de fibre optique selon la revendication 2, caractérisé en ce que le carter (3/5) se compose d'une matière plastique qui contient des charges minérales conductrices de la chaleur.

6. Procédé de fabrication d'un enroulement de fibre optique selon la revendication 1, dans lequel un corps de bobine (2) est disposé, pour la réalisation de l'enroulement, sur un mandrin d'enroulement et est alors expansé, la fibre optique est enroulée avec une légère tension d'enroulement sur le corps de bobine (2), le corps de bobine (2) reprend sa forme initiale lorsqu'il est retiré du mandrin d'enroulement et la bobine (1/2) est ensuite engagée dans le carter (3/5) et est enrobée sous vide.

Fig.1

Fig.2